# DEMANDE DE BREVET EUROPEEN

(11) **EP 4 733 857 A1**
(43) Date de publication de la demande: **29.04.2026**
(21) Numéro de dépôt: 24208836.7
(22) Date de dépôt: 25.10.2024
(51) Int. Cl.: G04B 19/28, A44C 5/00, A44C 27/00, F27D 5/00, G04B 37/22, G04D 3/00, B22F 3/10

(54) **SUPPORT DE FRITTAGE MOBILE**

(71) Demandeur: Richemont International S.A., 1752 Villars-sur-Glâne (CH)
(72) Inventeur: BONNET, Olivier, 51430 Bezannes (FR)
(74) Mandataire: Novagraaf International SA

(57) **Abrégé**

L'invention concerne un support de frittage (10) pour une pièce d'horlogerie ou de joaillerie (20), comprenant :
- une partie fixe (9),
- au moins une partie mobile (1) supportée par la partie fixe (9) et agencée pour supporter la pièce d'horlogerie ou de joaillerie (20), caractérisé en ce que l'au moins une partie mobile (1) est agencée pour passer d'une première position, avant frittage, à une deuxième position, après frittage.

## Description

La présente invention concerne de manière générale le domaine du luxe tel que l'horlogerie et la joaillerie, plus particulièrement le domaine de la fabrication de composants horlogers ou joailliers, comme par exemple les carrures de montre, les lunettes, les maillons notamment de bracelet, ainsi que le domaine de la joaillerie, comme par exemple les bracelets et les bagues.

Les pièces d'horlogerie ou de joaillerie réalisées par frittage sont connues dans l'art antérieur.

Toutefois, il est désirable d'améliorer l'esthétique et la fabrication de ces pièces, notamment une meilleure maîtrise dimensionnelle et géométrique de la pièce finale.

La présente invention a ainsi pour but de proposer une nouvelle construction de composants horlogers ou joailliers.

Dans un premier aspect, l'invention concerne un support de frittage pour une pièce d'horlogerie ou de joaillerie, comprenant :
- une partie fixe,
- au moins une partie mobile supportée par la partie fixe et agencée pour supporter la pièce d'horlogerie ou de joaillerie,
caractérisé en ce que l'au moins une partie mobile est agencée pour passer d'une première position, avant frittage, à une deuxième position, après frittage.

Ceci permet d'améliorer la maîtrise dimensionnelle de la pièce d'horlogerie ou de joaillerie à fritter, et de proposer un support de frittage dynamique réutilisable.

En d'autres termes, l'invention concerne un support de frittage réutilisable pour une pièce d'horlogerie ou de joaillerie, comprenant :
- une partie fixe,
- au moins une partie mobile supportée par la partie fixe et agencée pour supporter la pièce d'horlogerie ou de joaillerie,
caractérisé en ce que l'au moins une partie mobile est agencée pour basculer entre une première position, en porte-à-faux, avant frittage, et une deuxième position, après frittage.

D'une manière générale, on entend par un élément en porte-à-faux : un élément qui n'est pas à l'aplomb de son point d'appui.

Le support de frittage présente au moins un point d'appui ou de connexion entre la pièce fixe et la partie mobile autorisant au moins un degré de liberté en rotation, et de préférence un centre de gravité de l'au moins une partie mobile est agencé à distance de l'au moins un point d'appui ou de connexion dans le plan horizontal. De préférence, la projection, dans le plan horizontal, du centre de gravité et du point d'appui ou de connexion, dans une section ou pour une portion donnée, sont agencées à distance l'une de l'autre.

En d'autres termes, la portion de support 3 est un berceau.

L'invention peut aussi être définie selon les caractéristiques suivantes, prises individuellement ou en combinaison.

De préférence, la partie mobile est agencée pour basculer entre la première position et la deuxième position.

Avantageusement, l'au moins une partie mobile est agencée pour passer de la première position, avant frittage, à la deuxième position, après frittage, au moins sous l'effet de son poids propre.

Il s'agit de préférence du poids propre de la partie mobile. Il peut s'agir également du poids propre de la partie mobile et de la pièce d'horlogerie ou de joaillerie supportée par la partie mobile.

Avantageusement, le support de frittage comprend en outre un point de contact ou une partie de connexion entre la partie mobile et la partie fixe, la partie de connexion étant de préférence une liaison pivot ou une liaison rotule. Le point de contact peut être entendu au sens large, à savoir une ligne de contact ou une surface de contact.

De préférence, la liaison pivot ou la liaison rotule est agencée pour pouvoir faire basculer la partie mobile de la première position à la deuxième position.

Avantageusement, le centre de gravité de la partie mobile est décalé du point de contact ou de la partie de connexion, au moins dans la première position ou dans une direction intérieure de la partie mobile, dans le plan horizontal.

Dans un mode de réalisation préféré, la partie mobile comprend deux portions opposées et le centre de gravité de l'une des portions est décalé par rapport au point de contact dans la direction de l'autre portion.

En d'autres termes, le centre de gravité de la partie mobile est décalé ou à distance dans le plan horizontal. Il peut s'agir en outre du centre de gravité de la partie mobile et de la pièce d'horlogerie ou de joaillerie à fritter.

Avantageusement, la partie mobile est agencée pour générer un couple afin de la faire passer de la première position à la deuxième position.

Il peut s'agir d'un couple de renversement, d'un couple de frittage ou d'un couple de contraction.

Avantageusement, la partie mobile est agencée en porte à faux, de préférence dans la première position ou entre la première position et la deuxième position.

Avantageusement, le support de frittage comprend en outre une portion de masse additionnelle, telle qu'une masselotte, de préférence agencée du côté de basculement de la partie mobile.

Avantageusement, le support de frittage comprend en outre une articulation agencée pour favoriser le basculement. Cette articulation peut être positionnée au niveau du point de contact entre la partie mobile et la partie fixe et/ou au niveau d'une portion de support de la partie mobile.

Avantageusement, le support de frittage comprend une première butée et/ou une deuxième butée.

Avantageusement, la partie mobile est agencée contre la première butée dans la première position et/ou contre la deuxième butée dans la deuxième position.

Avantageusement, la partie mobile comprend la portion de support, agencée pour supporter la pièce d'horlogerie ou de joaillerie dans la première position et/ou dans la deuxième position (ou dans une position intermédiaire).

Avantageusement, la partie mobile comprend une troisième butée agencée pour venir en butée contre la pièce d'horlogerie ou de joaillerie dans la deuxième position.

Avantageusement, la partie fixe et/ou la partie mobile sont exemptes de changement dimensionnel durant le frittage.

Avantageusement, le support de frittage comprend en outre au moins une deuxième partie mobile, et de préférence l'amplitude de déplacement de l'au moins une deuxième partie mobile entre sa première et sa deuxième position diffère de la première partie mobile.

Cet agencement permet le frittage de pièces complexes non symétriques voir fortement dissymétriques. La deuxième partie mobile peut être agencée entre la partie fixe et la (première) partie mobile, et être liées à elles par un point d'appui, une surface d'appui ou une pièce de connexion telle qu'une articulation. La deuxième partie mobile peut être agencée entre la (première) partie mobile et la pièce à fritter, et être liées à elles par un point d'appui, une surface d'appui ou une pièce de connexion telle qu'une articulation.

En outre, la deuxième partie mobile peut être adjacente à la (première) partie mobile.

L'invention concerne dans un deuxième aspect, un procédé de fabrication d'une pièce d'horlogerie ou de joaillerie comprenant les étapes suivantes :
- fournir un support de frittage pour une pièce d'horlogerie ou de joaillerie selon le premier aspect,
- fournir et positionner une pièce à fritter sur le support de frittage,
- fritter la pièce à fritter de sorte à, ou afin de, fabriquer la pièce d'horlogerie ou de joaillerie.

L'invention concerne dans un troisième aspect, une pièce d'horlogerie ou de joaillerie réalisée avec le procédé de fabrication selon le deuxième aspect.

D'autres caractéristiques et avantages de la présente invention apparaîtront plus clairement à la lecture de la description détaillée qui suit, de modes de réalisation de l'invention donnés à titre d'exemple nullement limitatif et illustrés par les dessins annexés, dans lesquels :
la figure 1 représente un support de frittage pour une pièce d'horlogerie ou de joaillerie selon un premier mode de réalisation de la présente invention, dans une position dite avant frittage,
la figure 2 représente le support de frittage pour la pièce d'horlogerie ou de joaillerie selon la présente invention, dans une position dite après frittage,
la figure 3 représente le support de frittage pour la pièce d'horlogerie ou de joaillerie selon la présente invention, dans une position dite intermédiaire,
la figure 4 représente le support de frittage selon un deuxième mode de réalisation,
la figure 5 représente le support de frittage selon un troisième mode de réalisation.

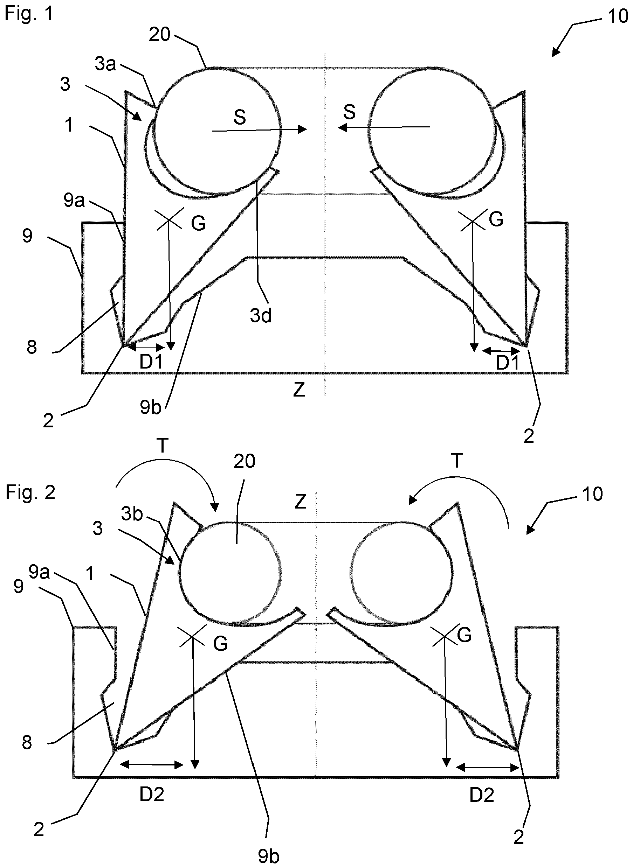

La figure 1 représente un support de frittage 10 pour une pièce d'horlogerie ou de joaillerie 20 selon un premier mode de réalisation de la présente invention, dans une position dite avant frittage.

Le support de frittage 10 pour la pièce d'horlogerie ou de joaillerie 20, comprend :
- une partie fixe 9,
- au moins une partie mobile 1 supportée par la partie fixe 9 et agencée pour supporter la pièce d'horlogerie ou de joaillerie 20.

L'au moins une partie mobile 1 est agencée pour passer d'une première position, avant frittage (en référence à la figure 1), à une deuxième position, après frittage (en référence à la figure 2).

De façon plus détaillée, l'au moins une partie mobile 1 est agencée pour passer de la première position, avant frittage, à la deuxième position, après frittage, au moins sous l'effet de son poids propre. Il s'agit de son propre poids ou de son poids complété du poids de la pièce d'horlogerie ou de joaillerie 20.

Le support de frittage 10 comprend un point de contact 2 ou une partie de connexion entre la partie mobile 1 et la partie fixe 9 (également appelée pièce fixe 9).

En référence à la figure 1, le point de contact 2 est séparé du centre de gravité par une distance D1 dans un plan horizontal (i.e. perpendiculaire à la verticale Z).

De façon plus détaillée, le point de contact 2 est séparé, en vue en coupe et en élévation, d'une distance D1 de la verticale passant par un centre de gravité G (en vue coupe et en élévation) d'une portion (donnée) de la partie mobile 1. Notons que la verticale générale à la figure 1 est représentée par l'axe Z.

Cette distance D1 permet d'appliquer un couple (de basculement) afin de favoriser le passage de la partie mobile 1 de la première positon à la deuxième position.

En d'autres termes, la partie mobile 1 est en porte à faux.

Notons que la partie de connexion étant de préférence une liaison pivot ou une liaison rotule.

La pièce fixe 9 comprend une portion d'évidemment 8 agencée pour recevoir une portion de basculement de la partie mobile 1, en particulier le point de contact 2 entre la partie mobile 1 et la pièce fixe 9.

La partie mobile 1 est agencée contre une première butée 9a de la pièce fixe 9 dans la première position (figure 1) et/ou contre la deuxième butée 9b de la pièce fixe 9 dans la deuxième position (figure 2).

Lors d'une opération de frittage, la pièce à fritter qui va devenir la pièce d'horlogerie ou de joaillerie 20 subit une contraction. Cet effort de contraction est indiqué par S à la figure 1 (ou rétractation : « shrinkage » en anglais).

La pièce à fritter est de préférence un corps dit « brun » (c'est-à-dire un corps délianté prêt à être fritté) ou un corps vert (c'est-à-dire un corps avant déliantage).

De manière conventionnelle, il est possible de mélanger, avant frittage, la poudre métallique et/ou des granulés plastiques. Il est fait référence par exemple aux thermoplastiques (par exemple polyéthylène, polypropylène), aux fluidifiants (par exemple paraffine, polyéthylène glycol) ou des mouillants (par exemple acide stéarique). Ce mélange, également appelé « feedstock » en anglais peut être extrudé dans une presse à injection, afin d'obtenir un composant dit « vert ». Le composant dit « vert » subit alors le déliantage, par exemple par action chimique ou thermique, afin d'obtenir un composant dit « marron » ou « brun ». La pièce « marron » est ensuite frittée, c'est-à-dire chauffée, généralement jusqu'à une valeur proche du point de fusion, de sorte à obtenir une pièce dite « grise », ou pièce finale. La pièce finale peut toutefois subir une ultime étape de finition, comme par exemple un polissage, un traitement de surface ou une gravure. Il est fait référence aussi au moulage par injection de poudre ou de poudre métallique (powder injection molding en anglais ou metal injection molding abrévié MIM).

La partie mobile 1 comprend une portion de support 3 afin de supporter la pièce d'horlogerie ou de joaillerie 20. A la figure 1, la portion de support 3 est en contact avec la pièce d'horlogerie ou de joaillerie 20 au niveau d'une autre butée 3a.

La pièce d'horlogerie ou de joaillerie 20 est de préférence une pièce torique ou de révolution, notamment autour de l'axe Z ou une pièce présentant une symétrie. Toutefois, la pièce d'horlogerie ou de joaillerie 20 peut être de toute forme.

De préférence, la partie mobile 1 est d'un seul tenant, par exemple une pièce torique ou de révolution, notamment autour de l'axe Z, ou présentant une symétrie. La partie mobile 1 peut également être en deux parties ou plusieurs parties. D'une manière générale, la partie mobile 1 peut être de toute forme, pour autant qu'elle ait les caractéristiques mentionnées.

A la figure 1, la portion de support 3 est représentée avec une butée 3d agencée pour venir en butée contre la pièce d'horlogerie ou de joaillerie 20 dans la position de la figure 1.

La figure 2 représente le support de frittage 10 pour la pièce d'horlogerie ou de joaillerie 20 selon la présente invention, dans une position dite après frittage.

Dans cette deuxième position, la partie mobile 1 a basculé comme l'indique les flèches T (représentant un ou plusieurs couples de basculement, « torque » en anglais).

En référence à la figure 2, le point de contact 2 est séparé du centre de gravité par une distance D2 dans un plan horizontal.

De façon plus détaillée, le point de contact 2 est séparé, en vue en coupe et en élévation, d'une distance D2 de la verticale passant par un centre de gravité en vue coupe et en élévation d'une portion de la partie mobile 1.

Notons que D2 est plus grand que D1, ce qui signifie que la partie mobile 1 a basculé vers l'intérieur.

A la figure 2, la portion de support 3 est représentée avec une troisième butée 3b agencée pour venir en butée contre la pièce d'horlogerie ou de joaillerie 20 dans la deuxième position.

Ceci permet de préférence de s'assurer du bon maintien de la pièce d'horlogerie ou de joaillerie 20 après frittage ce qui améliore la maîtrise dimensionnelle en assurant éventuellement un effort périphérique pendant le frittage.

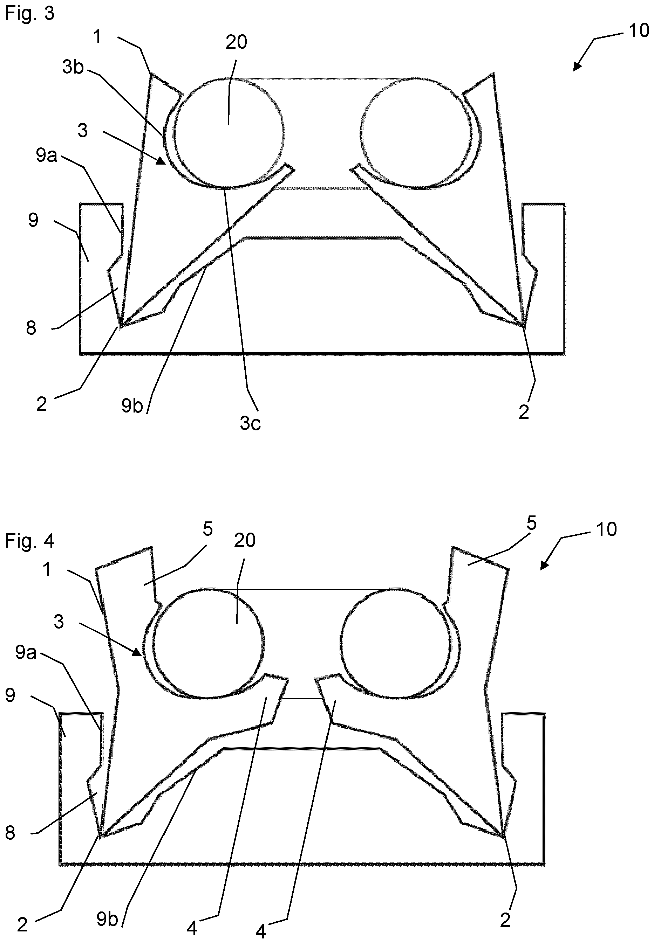

La figure 3 représente le support de frittage 10 pour la pièce d'horlogerie ou de joaillerie 20 selon la présente invention, dans une position dite intermédiaire (i.e. entre la première position et la deuxième position), notamment en cours de frittage.

A la figure 3, la portion de support 3 est représentée avec une butée 3c agencée pour venir en butée contre la pièce d'horlogerie ou de joaillerie 20 dans la position intermédiaire, ou la supporter.

La figure 4 représente le support de frittage 10 selon un deuxième mode de réalisation.

La partie mobile 1 comprend en outre une portion de masse additionnelle 4, telle qu'une masselotte, de préférence agencée du côté de basculement de la partie mobile 1.

Ceci permet de renforcer ou d'améliorer le basculement de la partie mobile 1 (également appelée pièce mobile 1).

La portion de support 3 peut comprendre en outre une portion d'équilibrage 5, agencée de préférence sur une portion haute de la portion de support 3, afin d'équilibrer la partie mobile 1. Ceci permet d'affiner la répartition des poids supplémentaires ajoutés à la pièce mobile 1 et de mieux maitriser le basculement de la partie mobile 1 et au final de mieux maîtriser les dimensions de la pièce d'horlogerie ou de joaillerie 20.

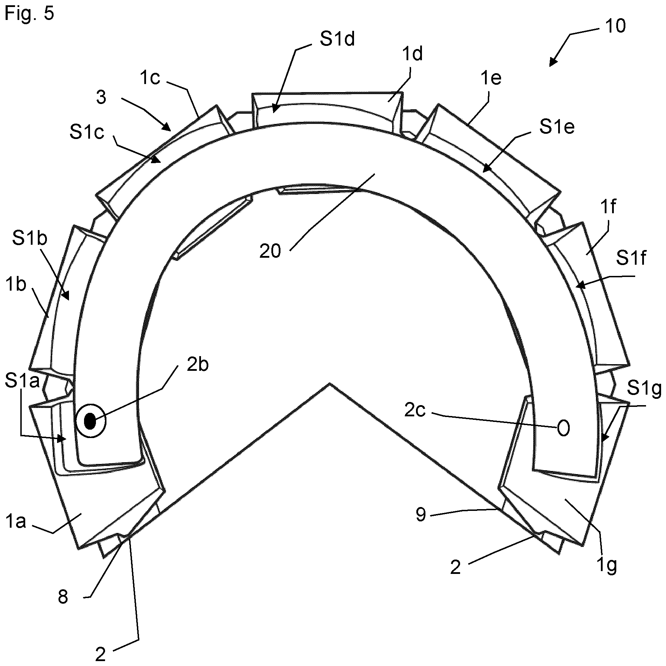

La figure 5 représente le support de frittage 10 selon un troisième mode de réalisation.

Le support de frittage 10 comprend en outre au moins une deuxième partie mobile 1. Dans l'exemple de la figure 5, le support de frittage 10 comprend une pluralité de parties mobiles 1a, 1b, 1c, 1d, 1e, 1f, 1g. Les parties mobiles sont agencées pour être adjacentes. Il est possible de prévoir seulement une portion de cercle comme l'exemple de la figure 5, de telle sorte que les parties mobiles les plus distales n'ont qu'une seule partie mobile adjacente.

Les parties mobiles 1, 1a-1g sont séparées par un espace (par exemple latéral ou tangentiel) entre elles.

Chaque partie mobile 1, 1a-1g présente un angle de débattement, comme dans l'exemple non limitatif de la figure 5. Un exemple est :
- l'angle de débattement de la partie mobile 1a est de 24°,
- l'angle de débattement de la partie mobile 1b est de 22°,
- l'angle de débattement de la partie mobile 1c est de 20°,
- l'angle de débattement de la partie mobile 1d est de 18°,
- l'angle de débattement de la partie mobile 1e est de 15°,
- l'angle de débattement de la partie mobile 1f est de 10°,
- l'angle de débattement de la partie mobile 1g est de 5°.

Il est envisageable d'avoir des degrés de liberté variables avec une amplitude croissante ou décroissante comme dans l'exemple présenté.

L'amplitude de débattement est de préférence comprise entre 0 et 180°, de préférence entre 0 et 120°, de préférence entre 0 et 90°, par exemple entre 1 et 60° ou entre 1 et 40°, par exemple 12° ou 20°, préférentiellement entre 5 et 30°.

Ainsi, la pièce à fritter 20 est accompagnée par les parties mobiles 1, 1a-1g pendant le frittage. L'idée est que la pièce à fritter glisse le moins possible, le retrait de la pièce durant le frittage est accompagné par le pivotement des parties mobiles 1, 1a-1g. La dissymétrie induit une inhomogénéité du retrait d'où des amplitudes de pivotement variables. Il est possible de prévoir que certaines parties mobiles 1, 1a-1g soient fixes (dès lors appelées autres parties fixes) à une extrémité et d'autres mobiles avec une amplitude de déplacement croissante ou décroissante.

Il est possible de régler les espacements afin de donner plus ou moins de jeu, et il est possible de prévoir un jeu prédéterminé pour que pendant le frittage et/ou à la fin du frittage, les parties mobiles 1, 1a-1g soient en contact ou ne soient pas en contact avec la partie mobile adjacente, afin de mieux maîtriser les dimensions de la pièce à fritter 20, en fonction du besoin.

Il est possible de prévoir en outre une ou plusieurs portions d'attache 2b, 2c sur la ou les portions de support 3, c'est-à-dire que la portion de support 3 peut supporter et/ou abuter la pièce à fritter 20 comme indiqué précédemment (par exemple grâce aux parties 3a, 3b, 3c, 3d) mais également être attachée à la pièce à fritter 20 (grâce aux portions d'attaches 2b, 2c). Chaque portion de support 3 peut avoir une ou plusieurs portions d'attache 2b, 2c.

Des exemples de portions d'attache 2b, 2c sont une goupille 2b agencée dans un trou de goupille de la pièce à fritter 20 ; ou un ou plusieurs bourrelets 2c agencés sur la portion de support 3 ou sur la pièce à fritter 20 et servant à freiner ou arrêter un mouvement de la pièce à fritter 20 dans le support 3 pendant le frittage.

Il est en outre possible de prévoir un espacement S1a, S1b, S1c, S1d, S1e, S1f, S1g (par exemple radial) entre la portion de support 3 et la pièce à fritter 20.

Dans un mode de réalisation, les espacements S1a, S1b, S1c, S1d, S1e, S1f, S1g sont agencés pour être décroissants depuis une portion d'attache 2b (en particulier une portion d'attache rigide telle que la goupille 2b). Ainsi, l'espacement S1a est plus grand que l'espacement S1b, qui est plus grand que l'espacement S1c, qui est plus grand que l'espacement S1d, qui est plus grand que l'espacement S1e, qui est plus grand que l'espacement S1f, qui est plus grand que l'espacement S1g. L'espacement S1g peut être minime voire être transformée en butée. Ceci permet de mieux contrôler la dimension de la pièce à fritter 20 pendant le frittage.

Notons que dans un mode de réalisation, il est possible de prévoir que la partie mobile 1 bascule vers l'extérieur pendant le frittage du fait du positionnement du centre de gravité par rapport au point de contact 2 comme expliqué précédemment.

Il est en outre possible de prévoir que certaines parties mobiles 1 basculent vers l'intérieur pendant le frittage et que certaines parties mobiles 1 basculent vers l'extérieur pendant le frittage. Par exemple, les parties mobiles 1a, 1b, 1c, 1d peuvent basculer vers l'intérieur pendant le frittage et les parties mobiles 1e, 1f, 1g peuvent basculer vers l'extérieur pendant le frittage.

On comprendra que diverses modifications et/ou améliorations évidentes pour l'homme du métier peuvent être apportées aux différents modes de réalisation de l'invention décrits dans la présente description.

Notons enfin qu'il est possible de combiner les modes de réalisations autant que possible ou nécessaire.

## Revendications

1. Support de frittage (10) pour une pièce d'horlogerie ou de joaillerie (20), comprenant :
- une partie fixe (9),
- au moins une partie mobile (1) supportée par la partie fixe (9) et agencée pour supporter la pièce d'horlogerie ou de joaillerie (20), **caractérisé en ce que** l'au moins une partie mobile (1) est agencée pour passer d'une première position, avant frittage, à une deuxième position, après frittage.

2. Support de frittage (10) selon la revendication précédente, dans lequel l'au moins une partie mobile (1) est agencée pour passer de la première position, avant frittage, à la deuxième position, après frittage, au moins sous l'effet de son poids propre.

3. Support de frittage (10) selon l'une des revendications précédentes, comprenant un point de contact (2) ou une partie de connexion entre la partie mobile (1) et la partie fixe (9), la partie de connexion étant de préférence une liaison pivot ou une liaison rotule.

4. Support de frittage (10) selon la revendication précédente, dans lequel le centre de gravité (G) de la partie mobile (1) est décalé du point de contact (2) ou de la partie de connexion, au moins dans la première position.

5. Support de frittage (10) selon l'une des revendications précédentes, dans lequel la partie mobile (1) est agencée pour générer un couple afin de la faire passer de la première position à la deuxième position.

6. Support de frittage (10) selon l'une des revendications précédentes, dans lequel la partie mobile (1) est agencée en porte à faux, de préférence dans la première position ou entre la première position et la deuxième position.

7. Support de frittage (10) selon l'une des revendications précédentes, comprenant en outre une portion de masse additionnelle (4), telle qu'une masselotte, de préférence agencée du côté de basculement de la partie mobile (1).

8. Support de frittage (10) selon l'une des revendications précédentes, comprenant une première butée (9a) et/ou une deuxième butée (9b).

9. Support de frittage (10) selon la revendication précédente, dans lequel la partie mobile (1) est agencée contre la première butée (9a) dans la première position et/ou contre la deuxième butée (9b) dans la deuxième position.

10. Support de frittage (10) selon l'une des revendications précédentes, dans lequel la partie mobile (1) comprend une portion de support (3), agencée pour supporter la pièce d'horlogerie ou de joaillerie (20) dans la première position et/ou dans la deuxième position.

11. Support de frittage (10) selon l'une des revendications précédentes, dans lequel la partie mobile (1) comprend une troisième butée (3b) agencée pour venir en butée contre la pièce d'horlogerie ou de joaillerie (20) dans la deuxième position.

12. Support de frittage (10) selon l'une des revendications précédentes, dans lequel la partie fixe (9) et/ou la partie mobile (1) sont exemptes de changement dimensionnel durant le frittage.

13. Support de frittage (10) selon l'une des revendications précédentes, comprenant en outre au moins une deuxième partie mobile, et de préférence l'amplitude de déplacement de l'au moins une deuxième partie mobile entre sa première et sa deuxième position diffère de la première partie mobile (1).

14. Procédé de fabrication d'une pièce d'horlogerie ou de joaillerie (20) comprenant les étapes suivantes :
- fournir un support de frittage (10) pour une pièce d'horlogerie ou de joaillerie (20) selon l'une des revendications précédentes,
- fournir et positionner une pièce à fritter sur le support de frittage (10),
- fritter la pièce à fritter de sorte à fabriquer la pièce d'horlogerie ou de joaillerie (20).

15. Pièce d'horlogerie ou de joaillerie (20) réalisée avec le procédé de fabrication selon la revendication précédente.
